# NEUE EUROPÄISCHE PATENTSCHRIFT

(11) **EP 3 213 168 B2**
(45) Veröffentlichungstag und Bekanntmachung des Hinweises auf die Entscheidung über den Einspruch: **07.07.2021**
(45) Hinweis auf die Patenterteilung: 04.07.2018
(21) Anmeldenummer: 15794073.5
(22) Anmeldetag: 22.10.2015
(51) Int. Cl.: G05G 1/30, G05G 5/03, F16D 23/12, B60T 7/04

(54) **VORRICHTUNG ZUR KRAFTSIMULATION AN EINEM BETÄTIGUNGSELEMENT EINES FAHRZEUGES, DAS ALS EIN PEDALSIMULATOR AUSGEBILDET IST**
DEVICE FOR SIMULATING A FORCE ON AN ACTUATION ELEMENT OF A VEHICLE, IN THE FORM OF A PEDAL SIMULATOR
DISPOSITIF PERMETTANT DE SIMULER L'APPLICATION D'UNE FORCE SUR UN ÉLÉMENT D'ACTIONNEMENT D'UN VÉHICULE, SOUS LA FORME D'UN SIMULATEUR DE PÉDALE

(30) Priorität: 29.10.2014 DE 102014222122
(43) Veröffentlichungstag der Anmeldung: 06.09.2017
(73) Patentinhaber: Schaeffler Technologies AG & Co. KG, 91074 Herzogenaurach (DE)
(72) Erfinder: FIORINI, Francesco, Emanuele, 32758 Detmold (DE); HONSELMANN, Sebastian, 77886 Lauf (DE)
(86) Internationale Anmeldenummer: PCT/DE2015/200482
(87) Internationale Veröffentlichungsnummer: WO 2016/066166

(56) Entgegenhaltungen:
- EP-A1- 0 771 705
- EP-A1- 1 557 333
- EP-A2- 2 896 539
- EP-A2- 2 919 090
- WO-A1-2010/060498
- DE-A1-102006 022 312
- DE-A1-102006 026 975
- GB-A- 516 037
- KR-A- 20100 042 352
- US-B1- 6 367 886
- US-B1- 6 367 886

## Beschreibung

Die Erfindung betrifft eine Vorrichtung zur Kraftsimulation an einem Betätigungselement eines Fahrzeuges, vorzugsweise ein Pedalsimulator, welcher eine haptische Rückmeldung über ein vorgegebenes Kraft-Weg-Verhalten vermittelt, umfassend eine Kolben-Zylinder-Einheit, wobei ein Kolben über eine Kolbenstange mit dem Betätigungselement verbunden ist, welches den Kolben innerhalb des Zylinders entgegen einer Rückstellkraft axial bewegt sowie eine Einrichtung zur Betätigung eines elektrischen Kupplungssystems.

Aus der DE 10 2011 016 239 A1 ist ein Pedalkraftsimulator für eine Fahrzeugbremsanlage mit elektronischer Signalübertragung bekannt, bei der eine, von der Fußkraft des Fahrzeugführers abhängige Aussteuerung des Bremsmomentes, insbesondere mittels elektro-hydraulischer oder elektro-mechanischer Systeme vorgenommen wird, wobei der Pedalkraftsimulator ein, für einen Fahrzeugführer gewohntes Bremsgefühl generiert. Der Pedalkraftsimulator umfasst eine pneumatisch arbeitende Kolben-Zylinder-Einheit, deren Kolben eine Kompressionskammer mit einem ansteuerbaren Ventil begrenzt und entgegen der Kompressionsrichtung mittels zumindest eines ersten Federelementes den Kolben mit einer Kraft belastet sowie über eine Kolbenstange mit einem Fahrzeugbremspedal derart wirkverbunden ist, dass die Kolbenstange während der Betätigung des Fahrzeugbremspedals eine Winkeländerung relativ zur Kolben-Zylinder-Einheit erfährt. Diese Winkelbeweglichkeit stellt hohe Anforderungen an die Konstruktion des Pedalkraftsimulators.

Die DE 10 2010 061 439 A1 offenbart ein Bremssystem für ein Kraftfahrzeug, bei welchem ein Bremspedal, das von einem Fahrzeugführer betätigbar ist, mit einem Pedalsimulator zur Erzeugung einer wegabhängigen Gegen- bzw. Rückstellkraft verbunden ist. Die Stellung des Bremspedals wird mittels eines Sensors erfasst und dessen Sensorsignal dem Steuergerät zur Auswertung zugeführt. Entsprechend der Stellung des Bremspedals erzeugt das Steuergerät Steuersignale für eine Antriebssteuereinheit und eine Bremssteuereinrichtung, so dass ein dadurch erzeugter generatorischer Bremsanteil zusammen mit dem Reibbremsanteil ein Bremsmoment bzw. eine Bremswirkung erzeugt, die der Stellung des Bremspedals entspricht. Gleichzeitig wird der Pedalsimulator von dem Steuergerät derart angesteuert, dass auf das Bremspedal eine Gegenkraft bzw. Rückstellkraft wirkt, sich also eine Weg-Kraft-Abhängigkeit einstellt, die dem Fahrer ein Pedalgefühl wie bei einer Bremsung ausschließlich mit einer hydraulischen Bremsanlage gibt.

Die Druckschrift US 6,367,886 B1 offenbart einen Bremspedal-Emulator zur Herstellung einer charakteristischen Bremskraftkennlinie, wobei die Kennlinie unter Zuhilfenahme einer mehrteiligen Federeinrichtung hergestellt wird.

Die Druckschrift DE 10 2006 026 975 A1 beschreibt ein Verfahren zum Simulieren sowie eine Anordnung zum Einstellen einer Betätigungskraft an einem Kupplungspedal einer automatisierten Kupplung, wodurch die auf das Pedal aufgebrachte Betätigungskraft individuell einstellbar ist.

Der Erfindung liegt die Aufgabe zugrunde, eine Vorrichtung zur Kraftsimulation an einem Betätigungselement eines Fahrzeuges anzugeben, welche dem Fahrzeugführer das gleiche Gefühl übermittelt wie bei einer normalen hydraulischen Anlage und trotzdem einfach herstellbar ist.

Erfindungsgemäß wird die Aufgabe dadurch gelöst, dass der Kolben gegen eine mehrteilige, elastische Anordnung drückt, welche in Abhängigkeit von dem zurückgelegten Weg des Kolbens eine Rückstellkraft oder eine Vorschubkraft gegenüber dem Kolben erzeugt. Dies hat den Vorteil, dass auch bei einem nicht hydraulischen Betätigungssystem, insbesondere einem rein elektrischen Fahrzeugkupplungssystem, dem Fahrzeugnutzer das gleiche Gefühl übermittelt wird, wie bei einem normalen hydraulischen Betätigungssystem. Die Vorrichtung zur Kraftsimulation simuliert dabei eine Kraft-Weg-Kennlinie, wobei die Kraft, welche am Fuß oder an der Hand des Fahrzeugnutzers über das Betätigungssystem angreift, in Abhängigkeit des, durch den Kolben zurückgelegten Weges hervorgerufen wird. Die Größe der Vorrichtung zur Kraftsimulation entspricht dabei der Größe eines Geberzylinders in einem hydraulischen Kupplungsbetätigungssystem, so dass keine weiteren Anforderungen an den Platzbedarf im Kraftfahrzeug gestellt werden, weshalb der Kraftsimulator anstelle des Geberzylinders an derselben Stelle im Kraftfahrzeug eingebaut werden kann.

Die mehrteilige elastische Anordnung ist als Federeinrichtung ausgebildet, welche ein erstes und ein drittes Federelement zur Bereitstellung einer Rückstellkraft aufweist, während ein räumlich zwischen dem ersten und dem zweiten Federelement angeordnetes zweites Federelement eine Vorschubkraft gegenüber den Kolben einstellt. Durch das Vorhandensein der, unterschiedliche Kräfte gegenüber dem Kolben bereitstellenden Federelemente ist es möglich, die von dem Pedalkraftsimulator ausgegebene Kennlinie besser an die Kennlinie anzupassen, die der Fahrzeugführer haptisch bei einer normalen hydraulischen Anlage wahrnimmt. Durch den Wechsel zwischen Rückstellkraft und Vorschubkraft (Zugkraft) wird ein Kraftunterschied erzeugt, welcher deutlich für den Fahrzeugnutzer spürbar ist.

In einer Ausgestaltung erstrecken sich das erste, zweite und dritte Federelement radial zur Bewegungsrichtung des Kolbens, wobei das nahe dem Zylinder angeordnete erste Federelement im entspannten Zustand direkt in axialer Richtung am Kolben anliegt, während das zweite und das dritte Federelement im entspannten Zustand in axialer Richtung beabstandet zu einer Vorschubeinrichtung des Kolbens positioniert sind. Durch diese radiale Ineinanderschachtelung der drei Federelemente wird besonders wenig Bauraum für den Pedalsimulator benötigt. Außerdem gewährleistet diese Ausgestaltung eine sehr feinfühlige Einstellung der Kraft-Weg-Kennlinie des Pedalsimulators.

In einer Ausführungsform ist das zweite Federelement mit einem Auslösemechanismus verbunden, welche im entspannten Zustand des zweiten Federelementes beabstandet zu dem dritten Federelement gegen den Kolben auf eine Zugkraft an dem Kolben umgeschaltet. Die Vorschubkraft gewährleistet ein Gefühl des Nachlassens der Kraft an dem, vom Fahrzeugnutzer genutzten Betätigungselement und simuliert somit eine abnehmende Kraft-Weg-Kennlinie im Gegensatz zu den Druckkräften, die einen Anstieg der Kraft-Weg-Kennlinie verursachen.

In einer Variante umfasst der Auslösemechanismus einen Einrastmechanismus, in welchem im betätigten Zustand des zweiten Federelementes nach einer vorgegebenen Vorschubbewegung des Kolbens die Vorschubeinrichtung eingreift und das dritte Federelement betätigt. Mittels eines solchen Einrastmechanismus kann einfach ein Umschalten von der Zugkraft des zweiten Federelementes auf die Druckkraft, die von dem dritten Federelement bereitgestellt wird, erzeugt werden. Da der Einrastmechanismus im Auslösemechanismus derart angeordnet ist, dass das Vorschubelement des Kolbens erst durch die Betätigungseinrichtung einen vorgegebenen Weg zurücklegen muss, um den Einrastmechanismus zu erreichen, ist ausreichend Zeit vorhanden, in welcher der Fahrzeugnutzer eine nachlassende Kraft am Betätigungselement wahrnimmt.

In einer weiteren Ausgestaltung ist die Vorschubeinrichtung stangenähnlich ausgebildet und an deren, dem zweiten Federelement zugewandten Ende ein kopfähnliches Eingreifelement für den Auslösemechanismus des zweiten Federelementes ausgebildet. Diese stangenähnliche Ausgestaltung der Vorschubeinrichtung, die am Kolben befestigt ist, erlaubt die Betätigung der innerhalb des ersten Federelementes angeordneten zweiten und dritten Federelemente, wodurch der vorhandene Bauraum innerhalb des Zylinders optimal genutzt wird.

In einer weiteren Variante weist das kopfähnliche Eingreifelement einen Anschlag zur Übertragung von Druckkräften auf den Auslösemechanismus auf, welcher den Einrastmechanismus des Auslösemechanismus des zweiten Federelementes betätigt. Somit wird gewährleistet, dass das zweite Federelement tatsächlich erst nach der Zurücklegung eines bestimmten Weges durch den Kolben betätigt wird.

Weiterhin ist es vorgesehen, dass das kopfähnliche Eingreifelement der Vorschubeinrichtung im ausgelösten Zustand des zweiten Federelementes eine Übertragung der Zugkraft des zweiten Federelementes auf die Kolbenstange unterstützt. Damit wird sichergestellt, dass der Fahrzeugnutzer anhand des Betätigungselementes in Form des Fahrzeugpedals tatsächlich ein Nachlassen der Kraft wahrnimmt.

Eine Weiterbildung der Erfindung betrifft eine Einrichtung zur Betätigung eines elektrischen Kupplungssystems, bei welchem ein Betätigungselement mit einer Vorrichtung zur Kraftsimulation an dem Betätigungselement verbunden ist, wobei die Stellung des Betätigungselementes von einer Sensoreinheit erfasst und elektrisch an eine Steuereinheit weitergegeben wird, welche mit einer Kupplung in einer Wirkverbindung steht. Die Vorrichtung zur Kraftsimulation ist dabei nach mindestens einem, der in dieser Schutzrechtsanmeldung ausgeführten Merkmale der Vorrichtung zur Kraftsimulation ausgebildet. Dies hat den Vorteil, dass bei einem elektrischen Kupplungssystem an dem Betätigungselement von dem Fahrzeugnutzer genau dieselbe Kraft wahrgenommen wird wie bei einem hydraulischen oder pneumatischen Kupplungssystem.

Vorteilhafterweise weist die Steuereinheit eine als Aktor ausgebildete Leistungseinheit zur Ansteuerung der Kupplung auf, welche mit der Kupplung mechanisch oder hydraulisch oder pneumatisch gekoppelt ist. Somit ist die Vorrichtung zur Kraftsimulation an einem Betätigungselement eines Fahrzeuges in einer beliebigen Form der Betätigungselemente einsetzbar.

Die Erfindung lässt zahlreiche Ausführungsformen zu. Eine davon soll anhand der in der Zeichnung dargestellten Figuren näher erläutert werden.

Es zeigen:
- Fig. 1:: eine Prinzipdarstellung eines elektro-hydraulischen Kupplungsbetätigungssystems,
- Fig. 2:: ein Ausführungsbeispiel für einen Pedalsimulator des elektrohydraulischen Kupplungsbetätigungssystems gemäß Fig. 1,
- Fig. 3:: ein Ausführungsbeispiel eines Auslösemechanismus des Pedalsimulators nach Fig. 2,
- Fig. 4: ein Ausführungsbeispiel eines Einrastmechanismus des Auslösemechanismus nach Fig. 3.

Gleiche Merkmale sind mit gleichen Bezugszeichen gekennzeichnet.

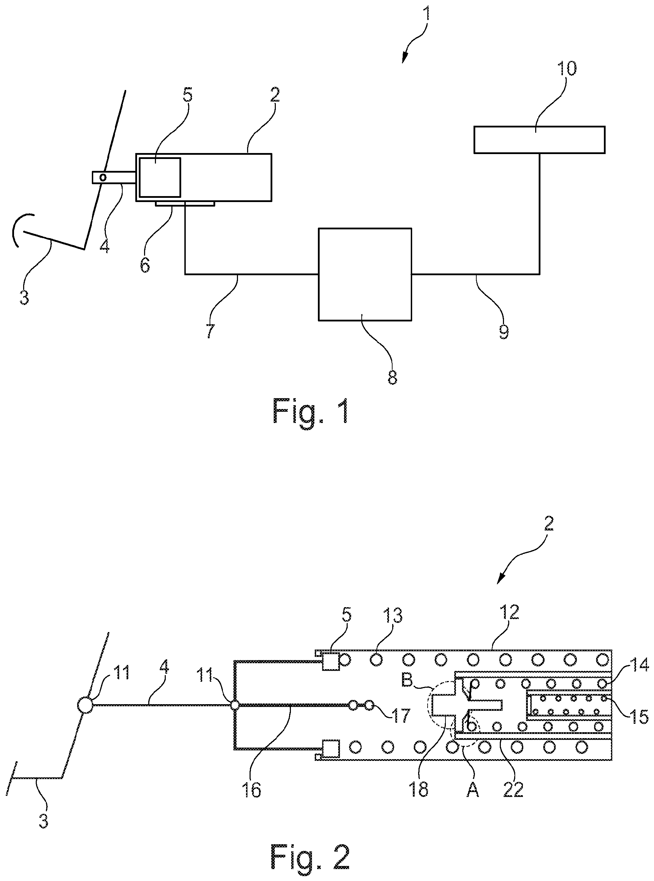

In Fig. 1 ist eine Prinzipdarstellung eines elektro-hydraulischen Kupplungsbetätigungssystems 1 dargestellt, welches auch als clutch-by-wire-System bezeichnet wird. Das elektro-hydraulische Kupplungsbetätigungssystem umfasst einen Pedalsimulator 2, der mechanisch mit einem Kupplungspedal 3 verbunden ist. Das Kupplungspedal 3 betätigt über eine Kolbenstange 4 einen, in dem Pedalsimulator 2 axial beweglich gelagerten Kolben 5. Die Bewegung des Kolbens 5 wird durch eine Wegsensoreinheit 6 detektiert, die mit dem Pedalsimulator 2 verbunden und vorzugsweise in diesen integriert ist. Über eine elektrische Leitung 7 ist die Wegsensoreinheit 6 mit einer Steuer- und Leistungseinheit 8 verbunden. Neben der Steuerelektronik umfasst die Steuer- und Leistungseinheit 8 einen Aktor, welcher über eine weitere Leitung 9 die Kupplung 10 ansteuert. Die Leitung 9 ist im vorliegenden Fall als hydraulische Leitung ausgebildet. Die Ansteuerung der Kupplung 10 kann alternativ aber auch pneumatisch oder mechanisch erfolgen.

In Fig. 2 ist ein Ausführungsbeispiel des Pedalsimulators 2 gezeigt, welcher in dem Kupplungsbetätigungssystem 1 gemäß Fig. 1 verwendet wird. Das Kupplungspedal 3 ist über einen Anschluss 11 an der Kupplungsstange 4 befestigt. Innerhalb eines Zylinders 12 wird der Kolben 5 über die Kupplungsstange 4 in Abhängigkeit von der Stellung des Kupplungspedals 3 axial bewegt. Der Innenraum des Zylinders 12 umfasst dabei ein Federsystem, bestehend aus drei Federelementen 13, 14, 15, die sich radial um die Bewegungsachse des Kolbens 5 ausdehnen und in axialer Richtung des Zylinders 12 erstrecken. Das erste Federelement 13, welches nahe der Zylinderwandung innerhalb des Zylinders 12 ausgebildet ist, liegt dabei am Kolben 5 im entspannten Zustand an. Innerhalb des ersten Federelementes 13 ist ein zweites Federelement 14 ausgebildet, welches sich axial nur halb so weit erstreckt wie das erste Federelement 13. Innerhalb des zweiten Federelementes 14 ist wiederum ein drittes Federelement 15 angeordnet, welches annähernd nur die Hälfte der axialen Ausdehnung des zweiten Federelementes 14 im entspannten Zustand erreicht.

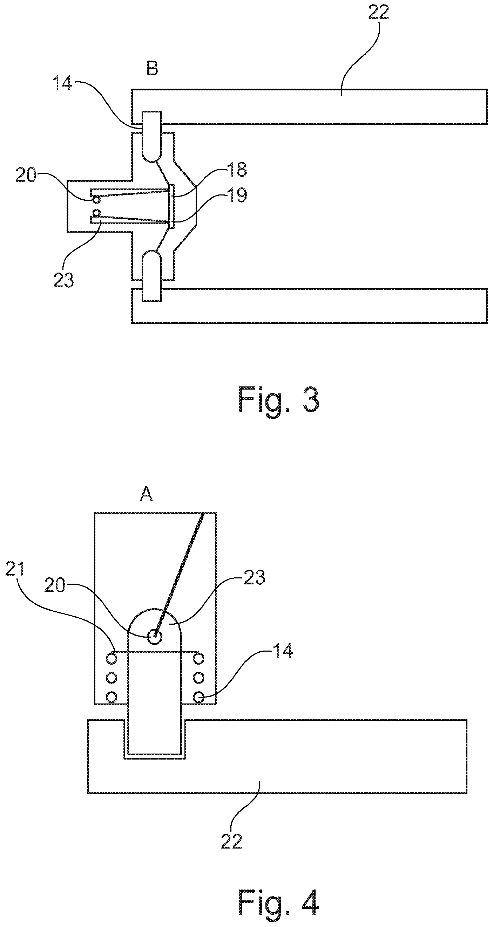

An dem Kolben 5 ist eine Vorschubeinrichtung 16 angeordnet, welche als Stange ausgebildet ist, die an dem, dem Kolben 5 abgewandten Ende ein kopfähnliches Eingreifelement 17 aufweist. Dieses Eingreifelement 17 betätigt im zusammengedrückten Zustand des ersten Federelementes 13, welches dem Kolben 5 eine Druckkraft entgegensetzt, einen Auslösemechanismus 18, der mit dem zweiten Federelement 14 verbunden ist. Ein solcher Auslösemechanismus 18 ist in Fig. 3 näher dargestellt. Der an den Federenden des zweiten Federelementes 14 angeordnete Auslösemechanismus18 weist dabei einen Anschlag 19 auf, an welchen das kopfähnliche Eingreifelement 17 der Vorschubeinrichtung 16 nach einem entsprechenden zurückgelegten Weg des Kolbens 5 angreift.

Der beschriebene Pedalsimulator 2 arbeitet wie folgt: Bei der Betätigung des Pedalsimulators 2 wird zunächst das erste Federelement 13 über die Kolbenstange 4 und den Kolben 5 vorgespannt. Dieses erste Federelement 13 übt auf den Kolben 5 eine Druckkraft aus. Damit erhöht sich die Kraft linear, die der Fahrerzeugnutzer am Kupplungspedal 3 bei dessen Betätigung verspürt.

Damit sich die durch den Pedalsimulator 2 simulierte Kraft-Weg-Kennlinie an eine reale Kraft-Weg-Kennlinie annähern kann, muss zu einem bestimmten Weg des Kupplungspedals 3, welcher einem vorgegebenen Weg des Kolbens 5 entspricht, die Betätigungskraft wieder absinken. Dieses Kupplungspedalverhalten wird typischerweise als drop-off angesprochen und umfasst ein Absinken der am Kupplungspedal 3 angreifenden Kraft. Um dies zu realisieren, wird der zunehmenden Druckkraft des ersten Federelementes 13 eine Gegenkraft entgegengesetzt, die in die gleiche Richtung wie die Fußkraft des Fahrerzeugnutzers wirkt. Zu diesem Zweck wird die Vorschubeinrichtung 16 mit dem kopfähnlichen Eingreifelement 17 zu einem vorgegebenen Wegpunkt des Kolbens 5 in den Auslösemechanismus 18 eingefahren, welcher mittig von dem zweiten Federelement 14 gehalten ist. Die Form des kopfähnlichen Eingreifelementes 17 ist bezüglich des Bewegens des Kolbens 5 in Richtung des zweiten Federelementes 14 so gewählt, dass diese leicht in den Auslösemechanismus 18 einfädeln kann. Das kopfähnliche Eingreifelement 17 besitzt einen Anschlag 20, über welchen Druckkräfte auf den Auslösemechanismus 18 ausgeübt werden. Über diesen Anschlag 20 des kopfähnlichen Eingreifelementes 17 der Vorschubeinrichtung 16 wird ein, in dem Auslösemechanismus befindlicher Einrastmechanismus 23 gelöst und damit das zweite Federelement 14 aktiviert. Durch die Aktivierung des zweiten Federelementes 14 zieht dieses an der Vorschubeinrichtung 16. Von diesem als Zugfeder ausgebildeten zweiten Federelement 14 wird die Kraft für den Kraftabfall in der Weg-Kraft-Kennlinie des Pedalsimulators 2 erzeugt.

Das kopfähnliche Eingreifelement 17 ist dabei so gestaltet, dass im ausgelösten Zustand des zweiten Federelementes 14 im Zusammenhang mit der Gegengeometrie des Auslösemechanismus 18 die entsprechende Zugkraft übertragen wird und das kopfähnliche Eingreifelement 17 nicht von der stangenförmigen Vorschubeinrichtung 16 springt. Auch kann das kopfähnliche Eingreifelement 17 entsprechend auf der Rückseite steiler gestaltet sein, um die anzugreifenden Zugkräfte aufnehmen zu können.

Im weiteren Verlauf der Auskuppelbewegung, d.h. bei weiterer Betätigung des Kupplungspedals 3 durch den Fahrzeugnutzer, wird dann über den Auslösemechanismus 18 ein weiteres drittes Federelement 15, das als Druckfeder ausgebildet ist, betätigt, um der Kraft-Weg-Kennlinie den charakteristischen Anstieg am Ende des Weges zu geben.

In Einkupplungsrichtung wird zunächst das als Druckfeder ausgebildete dritte Federelement 15 entspannt, bevor das als Zugfeder wirkende zweite Federelement 14 wieder gespannt wird. Zu dem entsprechenden Wegpunkt der Kraft-Weg-Kennlinie, an dem nur noch eine sinkende Kennlinie erwünscht ist, befindet sich ein Endanschlag 21 für den Auslösemechanismus 18. Schlägt der Auslösemechanismus 18 an diesen Endanschlag 21 an und wird die Kolbenstange 4 weiter in Einkuppelrichtung bewegt, wird das zweite Federelement 14 wieder über den Auslösemechanismus 18 mit dem Gehäuse 22 verriegelt. Ist das zweite Federelement 14 über den Auslösemechanismus 18 verriegelt, wird das kopfähnliche Eingreifelement 17 der Vorschubeinrichtung 16 freigegeben und kann sich weiter mit dem ersten, als Druckfeder ausgebildeten Federelement 13 auf der jetzt nur noch fallenden Kraft-Weg-Kennlinie in Einkuppelrichtung bewegen.

Der beschriebene Pedalsimulator 2 ist für ein nicht hydraulisches Betätigungssystem, insbesondere ein rein elektrisches Fahrzeugkupplungssystem vorgesehen. Er kann alternativ aber auch für beliebige andere Betätigungssysteme, wie beispielsweise Bremssysteme, eingesetzt werden, die auch statt eines Pedals ein beliebig anderes Betätigungselement aufweisen können.

### Bezugszeichenliste

1 Kupplungsbetätigungssystem
2 Pedalsimulator
3 Kupplungspedal
4 Kolbenstange
5 Kolben
6 Wegsensoreinheit
7 Elektrische Leitung
8 Steuer- und Leistungseinheit
9 Leitung
10 Kupplung
11 Anschluss
12 Zylinder
13 Federelement
14 Federelement
15 Federelement
16 Vorschubeinrichtung
17 Eingreifelement
18 Auslösemechanismus
19 Anschlag
20 Anschlag
21 Endanschlag
22 Gehäuse
23 Einrastmechanismus

## Patentansprüche

1. Vorrichtung zur Kraftsimulation an einem Betätigungselement eines Fahrzeuges, das als ein Pedalsimulator ausgebildet ist, welcher eine haptische Rückmeldung über ein vorgegebenes Kraft-Weg-Verhalten vermittelt, umfassend eine Kolben-Zylinder-Einheit (5, 12), wobei ein Kolben (5) über eine Kolbenstange (4) mit dem Betätigungselement (3) verbunden ist, welches den Kolben (5) innerhalb des Zylinders (12) entgegen einer Rückstellkraft axial bewegt, wobei der Kolben (5) gegen eine mehrteilige, elastische Anordnung (13, 14, 15) drückt, welche in Abhängigkeit von dem zurückgelegten Weg des Kolbens (5) eine Rückstellkraft oder eine Vorschubkraft gegenüber dem Kolben (5) erzeugt, und wobei die mehrteilige elastische Anordnung als Federeinrichtung (13, 14, 15) ausgebildet ist, welche ein erstes und ein drittes Federelement (13, 15) zur Bereitstellung einer Rückstellkraft aufweist, **dadurch gekennzeichnet, dass** ein räumlich zwischen dem ersten und dem dritten Federelement (13, 15) angeordnetes zweites Federelement (14) eine Vorschubkraft gegenüber dem Kolben (5) einstellt.

2. Vorrichtung nach Anspruch 1, **dadurch gekennzeichnet, dass** das erste, zweite und dritte Federelement (13, 14, 15) sich radial zur Bewegungsrichtung des Kolben (5) ausdehnen, wobei das nahe dem Zylinder (12) angeordnete erste Federelement (13) im entspannten Zustand direkt in axialer Richtung am Kolben (5) anliegt, während das zweite und das dritte Federelement (14, 15) im entspannten Zustand in axialer Richtung beabstandet zu einer Vorschubeinrichtung (16) des Kolbens (5) positioniert sind.

3. Vorrichtung nach Anspruch 2, **dadurch gekennzeichnet, dass** das zweite Federelement (14) mit einem Auslösemechanismus (18) verbunden ist, welcher im entspannten Zustand des zweiten Federelementes (14) beabstandet zu dem dritten Federelement (15) gegen den Kolben (5) auf eine Zugkraft an dem Kolben (5) umschaltet.

4. Vorrichtung nach Anspruch 3, **dadurch gekennzeichnet, dass** der Auslösemechanismus (18) einen Einrastmechanismus (23) umfasst, in welchem im betätigten Zustand des zweiten Federelementes (14) nach einer vorgegebenen Vorschubbewegung des Kolbens (5) die Vorschubeinrichtung (16) eingreift und das dritte Federelement (15) betätigt.

5. Vorrichtung nach Anspruch 3 oder 4, **dadurch gekennzeichnet, dass** die Vorschubeinrichtung (16) stangenähnlich ausgebildet ist und an deren, dem zweiten Federelement (14) zugewandtem Ende ein kopfähnliches Eingreifelement (17) für den Auslösemechanismus (18) ausgebildet ist.

6. Vorrichtung nach Anspruch 5, **dadurch gekennzeichnet, dass** das kopfähnliche Eingreifelement (17) einen Anschlag (20) zur Übertragung von Druckkräften auf den Auslösemechanismus (18) aufweist, weicher den Einrastmechanismus (23) des Auslösemechanismus (18) betätigt.

7. Vorrichtung nach Anspruch 5 oder 6, **dadurch gekennzeichnet, dass** das kopfähnliche Eingreifelement (17) der Vorschubeinrichtung (16) im ausgelösten Zustand des zweiten Federelementes (14) eine Übertragung der Zugkraft des zweiten Federelementes (14) auf die Kolbenstange (4) unterstützt.

8. Einrichtung zur Betätigung eines elektrischen Kupplungssystems, bei welchem ein Betätigungselement (3) mit einer Vorrichtung (2) zur Kraftsimulation an dem Betätigungselement (3) verbunden ist, wobei die Stellung des Betätigungselementes (3) von einer Sensoreinheit (6) erfasst und elektrisch an eine Steuereinheit (8) weitergegeben wird, welche mit einer Kupplung (10) in einer Wirkverbindung steht, **dadurch gekennzeichnet, dass** die Vorrichtung (2) zur Kraftsimulation nach mindestens einem der vorhergehenden Ansprüche 1 bis 7 ausgebildet ist.

9. Einrichtung nach Anspruch 8, **dadurch gekennzeichnet, dass** die Steuereinheit (8) eine als Aktor ausgebildete Leistungseinheit zur Ansteuerung der Kupplung (10) aufweist, welche mit der Kupplung (10) mechanisch oder hydraulisch oder pneumatisch gekoppelt ist.

## Claims

1. An apparatus for simulating force on an actuating element of a vehicle, which is designed as a pedal simulator which provides haptic feedback on a predefined force/travel behaviour, comprising a piston/cylinder unit (5, 12), wherein a piston (5) is connected via a piston rod (4) to the actuating element (3) which axially moves the piston (5) within the cylinder (12) against a restoring force, wherein the piston (5) presses against a multi-part, elastic arrangement (13, 14, 15) which, depending on the distance covered by the piston (5), generates a restoring force or a feed force with respect to the piston (5), and wherein the multi-part elastic arrangement is designed as a spring apparatus (13, 14, 15) which has a first and a third spring element (13, 15) for providing a restoring force, **characterised in that** a second spring element (14) arranged spatially between the first and the third spring element (13, 15) sets a feed force with respect to the piston (5).

2. The apparatus according to claim 1, **characterised in that** the first, second and third spring elements (13, 14, 15) expand radially in the direction of movement of the piston (5), wherein the first spring element (13) arranged near the cylinder (12), in the relaxed state, rests directly on the piston (5) in the axial direction, while the second and third spring elements (14, 15), in the relaxed state, are positioned at a distance in the axial direction from a feed apparatus (16) of the piston (5).

3. The apparatus according to claim 2, **characterised in that** the second spring element (14) is connected to a release mechanism (18) which, in the relaxed state of the second spring element (14) at a distance from the third spring element (15) opposite the piston (5), switches to a tensile force on the piston (5).

4. The apparatus according to claim 3, **characterised in that** the release mechanism (18) comprises a latching mechanism (23) in which, in the actuated state of the second spring element (14), the feed apparatus (16) engages after a predefined feed movement of the piston (5) and the third spring element (15) is actuated.

5. The apparatus according to claim 3 or 4, **characterised in that** the feed device (16) is designed to be rod-like and, at its end facing the second spring element (14), a head-like engagement element (17) for the release mechanism (18) is formed.

6. The apparatus according to claim 5, **characterised in that** the head-like engagement element (17) has a stop (20) for transmitting pressure forces to the release mechanism (18) which actuates the latching mechanism (23) of the release mechanism (18).

7. The apparatus according to claim 5 or 6, **characterised in that** the head-like engagement element (17) of the feed device (16) supports a transmission of the tensile force of the second spring element (14) to the piston rod (4) when the second spring element (14) is in the released state.

8. A device for actuating an electrical clutch system, in which an actuating element (3) is connected to an apparatus (2) for force simulation on the actuating element (3), wherein the position of the actuating element (3) is detected by a sensor unit (6) and is electrically transmitted to a control unit (8) which is in operative connection with a clutch (10), **characterised in that** the apparatus (2) is designed for force simulation according to at least one of the preceding claims 1 to 7.

9. The device according to claim 8, **characterised in that** the control unit (8) has a power unit designed as an actuator for controlling the clutch (10), which is mechanically or hydraulically or pneumatically coupled to the clutch (10).

## Revendications

1. Dispositif destiné à la simulation de force sur un élément d'actionnement d'un véhicule, lequel est conçu sous la forme d'un simulateur de pédales, lequel fournit un retour haptique par l'intermédiaire d'une caractéristique force-déplacement prédéfinie, comprenant une unité de piston-cylindre (5, 12), dans lequel un piston (5) est relié par l'intermédiaire d'une tige de piston (4) à l'élément d'actionnement (3), lequel déplace axialement le piston (5) à l'intérieur du cylindre (12) à l'encontre d'une force de rappel, dans lequel le piston (5) appuie contre un agencement (13, 14, 15) élastique en plusieurs parties, lequel, en fonction de la distance parcourue par le piston (5), génère une force de rappel ou une force d'avance par rapport au piston (5), et dans lequel l'agencement élastique en plusieurs parties est conçu sous la forme d'un dispositif à ressort (13, 14, 15), lequel comporte un premier et un troisième élément ressort (13, 15) pour fournir une force de rappel, **caractérisé en ce qu'**un deuxième élément ressort (14) disposé spatialement entre le premier et le troisième élément ressort (13, 15) définit une force d'avance par rapport au piston (5).

2. Dispositif selon la revendication 1, **caractérisé en ce que** les premier, deuxième et troisième éléments ressort (13, 14, 15) s'étendent radialement dans la direction de déplacement du piston (5), dans lequel le premier élément ressort (13) disposé à proximité du cylindre (12) repose à l'état détendu directement sur le piston (5) dans la direction axiale, les deuxième et troisième éléments ressort (14, 15) étant positionnés à l'état détendu à distance dans la direction axiale d'un dispositif d'avance (16) du piston (5).

3. Dispositif selon la revendication 2, **caractérisé en ce que** le deuxième élément ressort (14) est relié à un mécanisme de libération (18), lequel, à l'état détendu du deuxième élément ressort (14) espacé du troisième élément ressort (15) contre le piston (5), commute vers une force de traction sur le piston (5).

4. Dispositif selon la revendication 3, **caractérisé en ce que** le mécanisme de libération (18) comprend un mécanisme d'encliquetage (23) dans lequel, à l'état actionné du deuxième élément ressort (14), le dispositif d'avance (16) vient en prise après un mouvement d'avance prédéfini du piston (5) et actionne le troisième élément ressort (15).

5. Dispositif selon la revendication 3 ou 4, **caractérisé en ce que** le dispositif d'avance (16) est conçu sous la forme d'une tige et à son extrémité tournée vers le deuxième élément ressort (14), un élément de mise en prise (17) en forme de tête est formé pour le mécanisme de libération (18).

6. Dispositif selon la revendication 5, **caractérisé en ce que** l'élément de mise en prise (17) en forme de tête comporte une butée (20) pour transmettre des forces de pression au mécanisme de libération (18), laquelle actionne le mécanisme d'encliquetage (23) du mécanisme de libération (18).

7. Dispositif selon la revendication 5 ou 6, **caractérisé en ce que** l'élément de mise en prise (17) en forme de tête du dispositif d'avance (16), à l'état libéré du deuxième élément ressort (14), supporte une transmission de la force de traction du deuxième élément ressort (14) à la tige de piston (4).

8. Dispositif d'actionnement d'un système d'embrayage électrique, selon lequel un élément d'actionnement (3) est relié à un dispositif (2) destiné à la simulation de force sur l'élément d'actionnement (3), dans lequel la position de l'élément d'actionnement (3) est détectée par une unité de capteur (6) et transmise électriquement à une unité de commande (8), laquelle est en liaison fonctionnelle avec un embrayage (10), **caractérisé en ce que** le dispositif (2) est conçu pour la simulation de force selon l'au moins une quelconque des revendications 1 à 7 précédentes.

9. Dispositif selon la revendication 8, **caractérisé en ce que** l'unité de commande (8) comporte une unité de puissance conçue sous la forme d'un actionneur pour commander l'embrayage (10), lequel est accouplé mécaniquement ou hydrauliquement ou pneumatiquement à l'embrayage (10).
